# EUROPÄISCHE PATENTSCHRIFT

(11) **EP 2 136 582 B1**
(45) Veröffentlichungstag und Bekanntmachung des Hinweises auf die Patenterteilung: **07.09.2011**
(21) Anmeldenummer: 09162749.7
(22) Anmeldetag: 16.06.2009
(51) Int. Cl.: H04W 16/18

(54) **Verfahren und Computersystem zur Funkfeldplanung**
Method and computer system for radio field planning
Procédé et système informatique de planification de champ RF

(30) Priorität: 16.06.2008 DE 102008028541
(43) Veröffentlichungstag der Anmeldung: 23.12.2009
(73) Patentinhaber: Siemens Aktiengesellschaft, 80333 München (DE)
(72) Erfinder: Grebner, Jens, 90489 Nürnberg (DE); Kunz, Martin, 90459 Nürnberg (DE); Volkmann, Frank, 90475 Nürnberg (DE)

(56) Entgegenhaltungen:
- EP-A- 1 906 695
- US-A1- 2003 182 095
- US-A1- 2007 183 338
- "SINEMA E - Getting Started" NETWORKMANAGEMENT, SIEMENS AG, [Online] 14. Februar 2008 (2008-02-14), Seiten 1/30-30/30, XP002548549 Gefunden im Internet: URL:http://www.automation.siemens.com/down load/internet/cache/3/1359955/pub/de/SINEM A_E_getting_started_de.pdf>
- STRANNE A ET AL: "A framework for interference analysis of heterogeneous radio networks" PERSONAL, INDOOR AND MOBILE RADIO COMMUNICATIONS, 2004. PIMRC 2004. 15 TH IEEE INTERNATIONAL SYMPOSIUM ON BARCELONA, SPAIN 5-8 SEPT. 2004, PISCATAWAY, NJ, USA,IEEE, PISCATAWAY, NJ, USA, Bd. 2, 5. September 2004 (2004-09-05), Seiten 1168-1172, XP010754152 ISBN: 978-0-7803-8523-8

## Beschreibung

Die vorliegende Erfindung betrifft ein Verfahren und ein Computersystem zur Funkfeldplanung.

Funktechnologien haben in den letzten Jahren immer mehr an Bedeutung gewonnen, gerade auch im industriellen Umfeld. Dieser Trend hin zu Funktechnologien als Ersatz für drahtgebundene Technologien wird insbesondere aus Kostengründen anhalten, denn drahtlose Netzwerke können ohne größeren Aufwand in fast jeder Umgebung kostengünstiger installiert werden als drahtgebundene Netzwerke. Insbesondere der Einsatz drahtloser lokaler Funknetze gemäß einem Standard der IEEE 802.11 Familie (z.B. IEEE 802.11b/g) hat in den letzten Jahren stark zugenommen. Diese drahtlosen lokalen Funknetze werden üblicherweise als WLANs bezeichnet. Solch ein WLAN muss jedoch in der Industrie im Vergleich zu Heim- und Büroanwendungen wesentlich höhere Anforderungen erfüllen. Dementsprechend muss eine Funkfeldqualität in Bezug auf Abdeckung und Datenrate genau auf bestimmte Automatisierungslösungen angepasst sein, weshalb eine sorgfältige Funkfeldplanung unerlässlich ist.

Aus dem Stand der Technik sind Computersysteme bekannt, welche eine optimale Auswahl von Funkkomponenten vor der Inbetriebnahme eines Funkfelds und somit eine sorgfältige Funkfeldplanungen ermöglichen. Beispielsweise bietet die Firma Siemens AG eine Planungs-, Simulations- und Konfigurations-Software an, welche die Installation und Inbetriebnahme eines WLAN-Netzwerks mit Hilfe von Simulationsfunktionen vereinfacht. Diese Software heißt SINEMA E und ihre detaillierte Beschreibung ist im Internet verfügbar (http://www.automation.siemens.com/net/html_00/produkte/sinem a.htm). Mittels SINEMA E werden die Signalabdeckung, die Datenrate, das Signal-Rausch-Verhältnis und überlappende Accesspoints eines WLAN-Netzwerks unter Berücksichtigung von Umgebungs- und Geräteparametern visualisiert. Mit Hilfe dieser Visualisierung kann eine optimale Planung der Funkkomponenten erfolgen.

Jedoch treten auch in einem sorgfältig geplanten Funkfeld Probleme auf, für welche es bisher keine adäquaten Lösungen gibt. Basiert das geplante Funkfeld beispielsweise auf einer Funktechnologie gemäß IEEE 802.11b/g, kann es zu Störungen im Funkfeld kommen, wenn eine Funkquelle, die eine andere Funktechnologie nutzt, in die Nähe des Funkfelds gelangt und als Störsender wirkt. Ist eine solche Funkstörung beabsichtigt, ist üblicherweise von einem strategischen Störsender die Rede. Denn Störsender können gezielt genutzt werden, um anderen das Benutzen einer bestimmten Frequenz oder eines ganzen Frequenzbandes zu erschweren beziehungsweise um einen Funkbereich einzugrenzen. Bei einem strategischen Störsender spricht man auch von einem Jammer, welcher ein breitbandiges Rauschen oder Pulse aussendet. Jedoch wirken Störsender meist als ungewollte, technische Störsender. Wie gravierend beziehungsweise relevant die Störungen sind, hängt von der verwendeten Funktechnologie, dem verwendeten Übertragungsprotokoll sowie der industriellen Anwendung (Datenaufkommen, Zykluszeiten) ab.

Inzwischen sind Endgeräte, wie z.B. Handys, Smartphones oder PDAs, in der Lage, mit unterschiedlichen Funktechnologien, wie z.B. WLAN (IEEE 802.11) und Bluetooth (IEEE 802.15.1), zu arbeiten. Dabei nutzen diese gängigen Funktechnologien meist dieselben Frequenzressourcen, wie z.B. das lizenzfreie ISM-Band zwischen 2,400 GHz und 2,483 GHz. Das heißt, dass diese weit verbreiteten Endgeräte teilweise unwissend als permanente Funkquellen betrieben werden. Dadurch besteht die Gefahr, dass es leicht zu Störungen zwischen Endgerät und Funkfeld kommt, wenn beispielsweise das Endgerät über Bluetooth sendet und das Funkfeld ein WLAN ist. Es kann auch zu Störungen zwischen verschiedenen Endgeräten kommen.

Insbesondere besteht die Gefahr, dass Endgeräte in funksensible Bereiche des Funkfelds eingebracht werden und als Störsender beispielsweise eine sensible Funkstrecke innerhalb des Funkfelds stören, über welche Echtzeitdaten übertragen werden, die keinesfalls gestört werden dürfen. In diesem Fall kann der Störsender einen einwandfreien Betrieb im Funknetz verhindern.

Aus der EP 1 906 695 A1 ist ein Verfahren bekannt, mit welchem in einem spezifizierten geographischen Areal unerwünschte Funktionen eines mobilen Endgeräts, insbesondere eines Handys, gesperrt werden können.

In dem Aufsatz "A Framework for Interference Analysis of Heterogeneous Radio Networks", IEEE 2004, Seiten 1168 bis 1172, A. Stranne et al, wird eine Interferenz-Analyse verschiedener Funknetzwerke, insbesondere von Bluetooth und WLAN, beschrieben.

Der Erfindung liegt demgegenüber die Aufgabe zu Grunde ein verbessertes Verfahren und Computersystem zur Funkfeldplanung zu schaffen, welches vor allem die Verfügbarkeit drahtloser Kommunikation für sensible Anwendungen erhöht.

Die der Erfindung zu Grunde liegende Aufgabe wird mit den Merkmalen der unabhängigen Patentansprüche gelöst. Bevorzugte Ausführungsformen der Erfindung sind in den abhängigen Patentansprüchen angegeben.

Durch die Erfindung werden ein Verfahren und ein Computersystem zur Funkfeldplanung geschaffen, in welchen eine erste Steuereinheit einen Funkfeldabdeckungsbereich festlegt und eine Anzeigeeinheit Funkfeldparameter im Funkfeldabdeckungsbereich darstellt. Darstellbare Funkfeldparameter sind beispielsweise die Signalstärke und das Signal-Rausch-Verhältnis, welche mittels der Anzeigeeinheit ortsabhängig grafisch darstellbar sind. Ferner werden erfindungsgemäß mittels einer zweiten Steuereinheit funksensible Bereiche des Funkfeldabdeckungsbereichs festgelegt, welche vor mobilen Funkstörern zu schützen sind.

Durch das Festlegen funksensibler Bereiche, welche nachfolgend auch als No-Go-Areas bezeichnet werden, werden bereits bei der Funkfeldplanung Bereiche des Funkfelds berücksichtigt, die vor mobilen Funkstörern zu schützen sind. Denn diese funksensiblen Bereiche zeigen, wo es problematisch ist, wenn Funkstörer (z.B. Bluetooth fähige Handys) in das Funkfeld (z.B. WLAN) eingebracht werden. Insbesondere wird bei der Festlegung der funksensiblen Bereiche die Art potentieller Störer berücksichtigt. Wie später genauer beschrieben wird, können Störer dazu beispielsweise in unterschiedliche Klassen unterteilt werden. Dadurch wird eine negative Beeinflussung des Funkfelds durch mobile Funkstörer zumindest in den funksensiblen Bereichen verhindert. Somit kann eine bestimmte Funkqualität in den funksensiblen Bereichen sichergestellt werden, was beispielsweise bei der Übertragung von Echtzeitdaten eine wichtige Voraussetzung ist. Ferner wird erfindungsgemäß bereits bei der Funkfeldplanung berücksichtigt, dass mobile Funkstörer das geplante Funkfeld stören und somit negativ beeinflussen können. Mit anderen Worten wird die bisherige Funkfeldplanung derart erweitert, dass potentielle Funkstörer und ihre Auswirkung auf das Funkfeld bzw. Teilnehmer des Funkfelds berücksichtigt werden, indem bereits bei der Funkfeldplanung funksensible Bereiche ermittelt werden. Die vorliegende Erfindung kann beispielsweise in IEEE 802.11, IEEE 802.15.1, IEEE 802.15.4 oder anderen Funktechnologien im ISM-Band eingesetzt werden (drahtlose Feldgeräte mit Projektierungsmöglichkeit).

Nach einer Ausführungsform der Erfindung wird eine Funkfeldverteilung permanent gemessen. Durch solch eine Permanentüberwachung des Funkfelds kann ein Verletzen der No-Go-Areas in Echtzeit verhindert und die Integrität der No-Go-Areas überwacht werden. In einer Weiterbildung dieser Ausführungsform wird mittels einer Alarmvorrichtung ein Alarm ausgelöst, wenn ein Funkstörer in die Nähe eines funksensiblen Bereichs kommt. Dadurch wird der funksensible Bereich des Funkfelds noch besser geschützt.

Wird ein Funkstörer in der Nähe einer No-Go-Area erkannt, so wird dieser Funkstörer vorzugsweise basierend auf den physikalischen Eigenschaften verschiedener Funktechnologien und Erfahrungswerten klassifiziert. Hier spielt neben der Applikation die verwendete Funktechnologie und deren Firmwarestand eine Rolle. Denn beispielsweise ist Bluetooth nicht gleich Bluetooth (Bluetooth, Bluetooth mit AFH oder Bluetooth mit CBL). Abhängig von den verschiedenen Firmwareständen sind unterschiedliche Coexistence Awaring Mechanismen integriert. Die wichtigsten Mechanismen sind dabei das adaptive Frequenzhoppingverfahren und das manuelle Channel Blacklisting Verfahren. Abhängig von der Klassifizierung des Funkstörers kann beurteilt werden, wie gravierend die Auswirkungen des Funkstörers auf den funksensiblen Bereich sind.

Eine Störklasse setzt sich im Wesentlichen aus folgenden Parametern zusammen:
- verwendete Funktechnologie
- Sendeleistung
- Firmwarestand / Integrierte Coexistence Awareness Mechanismen
- Applikation
- Mobilität

Gemäß einer weiteren Ausführungsform der Erfindung muss die Festlegung der funksensiblen Bereiche nicht zwangsläufig nur basierend auf der Funkfeldplanung erfolgen sondern kann zusätzlich basierend auf einer Messung der tatsächlichen Funkfeldparameter im Funkfeldabdeckungsbereich erfolgen. Beispielsweise können nach Abschluss der ursprünglichen Funkfeldplanung und nach Installation des geplanten Funkfelds innerhalb dieses Funkfelds spezielle Funkstrecken oder eine Erweiterung des Funkfelds geplant werden. Dann ist es vorteilhaft, die tatsächlichen Funkfeldparameter (erneut) zu messen und die Funkfeldplanung nicht oder nicht nur basierend auf in Datenbanken hinterlegten Werten durchzuführen. Wird beispielsweise nachträglich eine Funkstrecke für Echtzeitdaten vorgesehen, muss ein funksensibler Bereich im Funkfeldabdeckungsbereich geplant werden. Bei solch einer Planung ist es wichtig, dass der funksensible Bereich für die geplante Funkstrecke groß genug beziehungsweise nicht zu groß dimensioniert wird. Wäre der funksensible Bereich zu klein, wäre eine Störung durch einen Funkstörer wahrscheinlicher. Wäre der funksensible Bereich hingegen zu groß, würde es zu einer unnötigen Reduzierung des allgemein nutzbaren Funkfelds kommen. Daher ist es vorteilhaft, die nachträgliche Planung auf tatsächlichen Funkfeldparametern zu basieren.

In einer weiteren Ausführungsform der Erfindung erfolgt die Funkfeldplanung über eine grafische Benutzeroberfläche und werden die funksensiblen Bereiche über diese grafische Benutzeroberfläche in die Funkfeldplanung eingebracht, z.B. in Form von "roten Flächen". Somit wird bereits bei der Funkfeldplanung visualisiert, in welchen Bereichen normal nicht vorhandene Sender als Funkstörer für das Funkfeld beziehungsweise einzelne Teilnehmer innerhalb dieses Funkfelds wirken können. Ferner wird die Funkfeldplanung dadurch vereinfacht.

In einer weiteren Ausführungsform der Erfindung werden die funksensiblen Bereiche in der realen Welt abgesichert, beispielsweise durch sichtbare Kennzeichnungen. Wird beispielsweise ein WLAN-Netzwerk auf einem Firmengelände geplant und sind mehrere funksensible Bereiche innerhalb des Firmengeländes vorgesehen, so können um diese Bereiche herum Schranken, Schilder, etc. angebracht werden, um die funksensiblen Bereiche vor einem unerwünschten Einfluss durch Funkstörer zu schützen.

Bei der Realisierung der vorliegenden Erfindung werden vorzugsweise ausschließlich bestehende Infrastrukturen verwendet und angepasst, um die funksensiblen Bereiche festzulegen, so dass auch bereits realisierte Funkfelder kostengünstig nachgerüstet werden können. Dabei kann die erfindungsgemäße Funkfeldplanung in ein vorhandenes Planungswerkzeug implementiert werden, wie z.B. das eingangs beschriebene Werkzeug Sinema E der Firma Siemens AG. Dann werden auf Grundlage vorhandener Planungs-/Überwachungsdaten No-Go-Areas berechnet. Dabei kann die Berechnung der funksensiblen Bereiche abhängig von der Art des Funkfelds und der Art des Störsystems erfolgen.

Es gibt Fälle, in denen das Funkfeld auf einer ersten Funktechnologie basiert, welche für eine andere Funktechnologie besonders störanfällig ist. Dies ist beispielsweise der Fall, wenn das Funkfeld ein WLAN-Netzwerk ist und Bluetooth fähige Handys in das Funkfeld eingebracht werden. Denn dann treffen Funktechnologien aufeinander, welche mit dem 2,4 GHz ISM Frequenzband die gleichen Funkressourcen nutzen. Ein Bluetooth (IEEE 802.15.1) fähiges Handy stellt dabei eine Art Worst-Case-Szenario dar. Denn es lässt sich nicht sagen, welcher Firmwarestand im Telefon integriert worden ist. Das heißt, es ist unbekannt, ob und in wie weit der Bluetooth Protokoll-Stack um einen adaptiven Frequenzhoppingmechanismus erweitert worden ist. Sicher ist, dass Mobiltelefone auf Grund ihrer Anwendung (Plug and Play Funktionalitäten) keinen Channel Blacklisting Mechanismus integriert haben. Deshalb muss man bei der Betrachtung von Bluetooth fähigen Telefonen immer vom Bluetooth Standard ohne Coexistence Awareness Mechanismen ausgehen. Generell kommt es im Anwendungsfall zu hohen Kanalauslastungen, da oft entweder Downloads oder Bluetooth-Headset-Übertragungen durchgeführt werden. Dadurch ist definitiv von einer stark negativen Beeinflussung der geplanten Kanalparameter auszugehen.

Um die Bestimmung von applikationsabhängigen Anforderungen an den Funkkanal und damit die Ermittlung funksensibler Bereiche (No-Go-Areas) zu vereinfachen, kann man die durchzuführenden Anwendungen klassifizieren. Beispielhafte Parameter für die Klassifizierung solcher Applikationen sind:
- Datenaufkommen: wird zyklisch ein Daten-Bit übertragen oder wird VoIP oder Video Streaming betrieben
- Zyklus-/Übertragungszeit: welche Anforderungen bestehen bezüglich der Jitter von Zyklus- oder Übertragungszeiten
- Anzahl der Teilnehmer: wird eine Punkt-zu-Punkt Verbindung aufgebaut oder teilt man den Kanal mit vielen weiteren Teilnehmern
- Ausdehnung des Netzes: ist das Netz auf einen AP beschränkt oder muss eine Zellplanung gemacht werden
- Mobilität

Durch diese Klassifizierung ist es möglich, eine Teilnehmerzahl im Funkfeld zu erhöhen und beispielsweise eine Latenzzeit in IEEE 802.11 oder IEEE 802.15.4 basierten Netzen bei gleichzeitiger Wahrung der Projektierungsmöglichkeit der Teilnehmer zu verringern.

Nachfolgend werden bevorzugte Ausführungsbeispiele der Erfindung mit Bezugnahme auf die Zeichnungen näher erläutert.
- Figur 1: zeigt ein Flussdiagramm eines Funkfeldplanungsver- fahrens gemäß der vorliegenden Erfindung;
- Figur 2: zeigt mittels eines Blockdiagramms ausgewählte Kom- ponenten eines Computersystems zur Funkfeldplanung gemäß einem Ausführungsbeispiel der vorliegenden Erfindung;
- Figur 3: zeigt einen Funkfeldabdeckungsbereich eines Accesspoints, einen im Funkfeldabdeckungsbereich angeordneten Teilnehmer, einen funksensiblen Be- reich zwischen dem Accesspoint und dem Teilnehmer sowie einen Funkstörer außerhalb des funksensiblen Bereichs; und
- Figur 4: zeigt eine Anordnung, welche ähnlich zu der in Fi- gur 3 ist, wobei der Funkstörer innerhalb des funk- sensiblen Bereichs angeordnet ist.

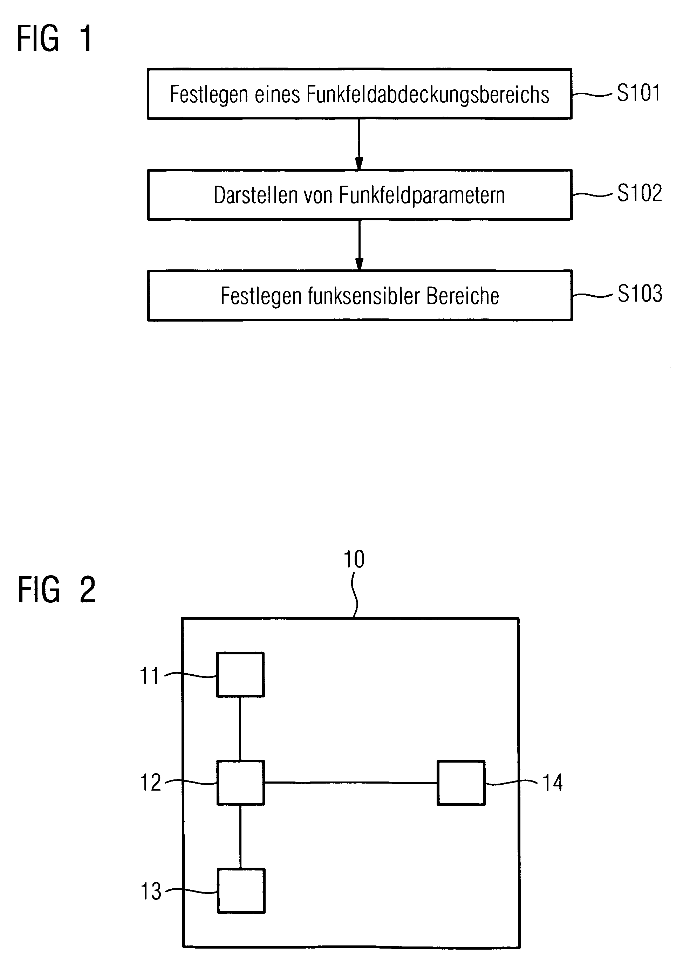

Figur 1 zeigt ein Flussdiagramm eines Funkfeldplanungsverfahrens gemäß der vorliegenden Erfindung. Wie bei einer herkömmlichen Funkfeldplanung wird zuerst ein Funkfeldabdeckungsbereich festgelegt (S101), in welchem das Funkfeld ausreichend stark ist, um eine zuverlässige Kommunikation zwischen Teilnehmern des Funkfelds zu gewährleisten. Anschließend werden bei der Funkfeldplanung Funkfeldparameter im Funkfeldabdeckungsbereich dargestellt (S102). Dazu werden üblicherweise die örtlichen Gegebenheiten innerhalb des Funkfeldabdeckungsbereichs analysiert. Das heißt, typische Hindernisse für Funkwellen wie z.B. Wände und Maschinen werden bereits bei der Funkfeldplanung beachtet. Auch Accesspoints und Clients innerhalb des Funkfeldabdeckungsbereichs werden dargestellt.

Diese und weitere Elemente können über die grafische Benutzeroberfläche eingegeben und/oder bearbeitet werden. Eigenschaften dieser Elemente sind üblicherweise in einer Datenbank hinterlegt, so dass Funkfeldparameter (z.B. Signalstärke, Datenrate, etc.) im Funkfeldabdeckungsbereich problemlos ermittelt und dargestellt werden können. Basierend auf den dargestellten Funkfeldparametern erfolgt dann die Detailarbeit, um ein zuverlässiges Funkfeld bereitstellen zu können. Das heißt, dass zusätzliche Accesspoints vorgesehen werden, vorhandene Accesspoints anders angeordnet werden, Antennen anders ausgerichtet werden, usw.

Erfindungsgemäß erfolgt bei der Funkfeldplanung auch eine Festlegung funksensibler Bereiche (S103) des Funkfeldabdeckungsbereichs, welche vor mobilen Funkstörern zu schützen sind. Zwar kann bei der Funkfeldplanung noch nicht endgültig festgelegt werden, in welche Bereiche des Funkfelds Funkstörer eindringen werden, jedoch kann bereits festgelegt werden, in welche Bereiche Funkstörer keinesfalls eindringen sollen. Somit ist es möglich, besonders sensible Kommunikationsstrecken innerhalb des Funkfeldabdeckungsbereichs zu schützen.

Figur 2 zeigt mittels eines Blockdiagramms ausgewählte Komponenten eines Computersystems (10) zur Funkfeldplanung gemäß einem Ausführungsbeispiel der vorliegenden Erfindung. Wie in herkömmlichen Computersystemen wird in dem in Figur 2 dargestellten Ausführungsbeispiel ein Funkfeld über eine graphische Benutzeroberfläche (nicht gezeigt) festgelegt. Das heißt, einem Benutzer des Computersystems (10) ist es möglich über grafische Symbole mit dem Computersystem zu interagieren. Diese Interaktion erfolgt üblicherweise über eine Maus oder eine Tastatur (nicht gezeigt), kann aber auch über einen Touchscreen (nicht gezeigt) erfolgen. Eine erste Steuereinheit (11) des Computersystems (10) verarbeitet Benutzereingaben entsprechend, um sie bei der Implementierung des Funkfelds umzusetzen. Wie bereits in Bezug auf Figur 1 erläutert, fließen mehrere Parameter in die Funkfeldplanung ein, wie z.B. örtliche Gegebenheiten, Accesspoints, Teilnehmer, etc.

Die daraus abgeleiteten Funkfeldparameter werden dann auf einer Anzeigeeinheit (12) dargestellt, um Korrekturen im Funkfeldabdeckungsbereich vorzunehmen (z.B. Antennenausrichtung anpassen, zusätzliche Accesspoints vorsehen, Anordnung der Acesspoints verändern).

Im Ausführungsbeispiel der Figur 2 ist nun eine weitere, zweite Steuereinheit (13) im Computersystem (10) vorgesehen, welche zum Festlegen eines oder mehrerer funksensibler Bereiche des Funkfeldabdeckungsbereichs dient, die vor mobilen Funkstörern zu schützen sind. Dazu muss ermittelt werden, in welchen Bereichen des Funkfeldabdeckungsbereichs Funkübertragungen vorgesehen sind, die nicht unterbrochen oder anderweitig negativ beeinflusst werden dürfen, um die Zuverlässigkeit und Qualität des Funkfelds zu gewährleisten. Dabei ist es nicht zwingend notwendig, dass die zweite Steuereinheit (13) als separate Steuereinheit vorgesehen ist. Vielmehr können die erste und die zweite Steuereinheit (11, 13) in einer einzelnen Steuereinheit vereint sein, welche in der Lage ist, die Funktionen beider Steuereinheiten auszuführen. Mit anderen Worten ist ein erfindungsgemäßes Computersystem (10) so eingerichtet, dass es zusätzlich zu den bisherigen Planungsschritten einen weiteren Schritt verarbeiten kann, und zwar das Festlegen eines oder mehrerer funksensibler Bereiche, um bei der Realisierung des geplanten Funkfelds auch diese funksensiblen Bereiche zu beachten. Sobald die Funkfeldplanung abgeschlossen ist, überträgt das Computersystem die ermittelten Daten über eine Schnittstelle (14) an eine zentrale Steuereinheit und/oder einzelne Komponenten des Funkfelds.

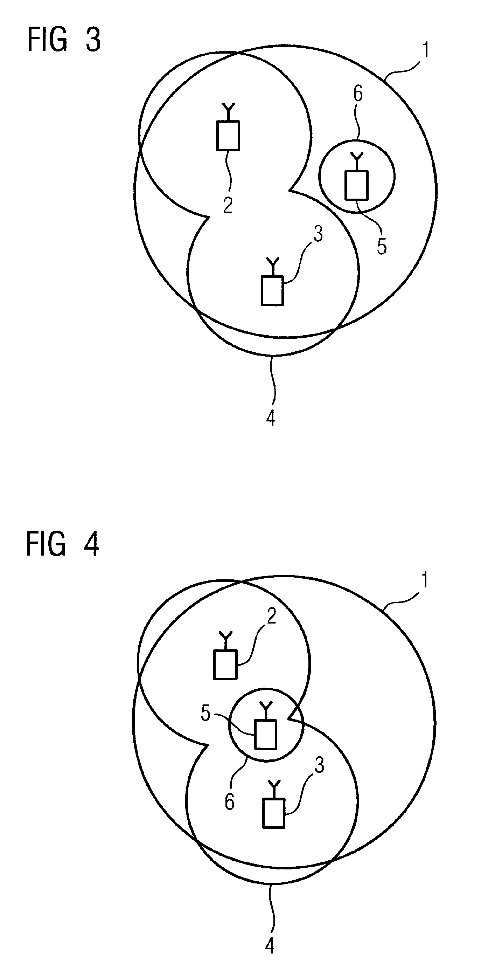

Figur 3 zeigt einen Funkfeldabdeckungsbereich 1 eines Accesspoints 2, einen im Funkfeld 1 angeordneten Teilnehmer 3, einen funksensiblen Bereich 4 zwischen dem Accesspoint 2 und dem Teilnehmer 3 sowie einen Funkstörer 5. In Figur 3 befindet sich der Funkstörer 5 außerhalb des funksensiblen Bereichs 4, so dass er die Kommunikation zwischen dem Accesspoint 2 und dem Teilnehmer 3 nicht stört.

Figur 4 zeigt eine Anordnung, welche ähnlich zu der in Figur 3 ist, wobei der Funkstörer 5 innerhalb des funksensiblen Bereichs 4 angeordnet ist. Daher stört der Funkstörer 5 die Kommunikation zwischen dem Accesspoint 2 und dem Teilnehmer 3.

In einem bevorzugten Ausführungsbeispiel der vorliegenden Erfindung wird der Funkfeldabdeckungsbereich 1 durch einen WLAN-Accesspoint 2 erzeugt und der Teilnehmer 3 besitzt eine WLAN-Schnittstelle, um mit dem WLAN-Accesspoint 2 zu kommunizieren. Der Funkstörer 5 ist ein Bluetooth fähiges Mobiltelefon, wobei die Bluetooth-Strahlung in einem Strahlungsbereich 6 wirksam ist. Nachdem sich diese beiden Funktechnologien gegenseitig negativ beeinflussen können, was zu Funkstörungen führt, wird das Funkfeld mit geeigneten Mitteln (nicht gezeigt) permanent überwacht. Sobald der Funkstörer 5 in die Nähe eines ermittelten funksensiblen Bereichs 4 gelangt beziehungsweise in den funksensiblen Bereich 4 eindringt, wird ein Alarm ausgelöst. Somit verhindert das erfindungsgemäße Festlegen eines funksensiblen Bereichs 4, dass es zu einer Beeinflussung einer Funkkommunikation in dem funksensiblen Bereich 4 durch einen Funkstörer 5 kommt. Ferner kann der funksensible Bereich 4 in der realen Welt innerhalb des Funkfeldabdeckungsbereichs 1 mit sichtbaren Kennzeichnungen (nicht gezeigt) gekennzeichnet sein, um darauf hinzuweisen, dass ein Betreten des funksensiblen Bereichs 4 mit bestimmten Geräten untersagt ist. Dies ist beispielsweise auf Firmengeländen nützlich, auf welchen sensible Daten über eine Funkstrecke zwischen zwei Punkten mittels WLAN ausgetauscht werden und auf welchen sich viele Personen mit Bluetooth fähigen Mobiltelefonen bewegen.

## Patentansprüche

1. Verfahren zur Funkfeldplanung, umfassend die Schritte:
- Festlegen (S101) eines Funkfeldabdeckungsbereichs (1) und
- Darstellen (S102) von Funkfeldparametern im Funkfeldabdeckungsbereich (1),
**gekennzeichnet durch**
- Festlegen (S103) eines oder mehrerer funksensibler Bereiche (4) des Funkfeldabdeckungsbereichs (1), welche vor mobilen Funkstörern (5) zu schützen sind, wozu ermittelt wird, in welchen Bereichen des Funkfeldabdeckungsbereichs Funkübertragungen vorgesehen sind, die nicht unterbrochen oder anderweitig negativ beeinflusst werden dürfen.

2. Verfahren nach Anspruch 1, wobei eine Funkfeldverteilung permanent gemessen wird.

3. Verfahren nach Anspruch 2, wobei ein Alarm ausgelöst wird, wenn ein Funkstörer (5) in die Nähe eines der funksensiblen Bereiche (4) kommt.

4. Verfahren nach einem der vorhergehenden Ansprüche, wobei tatsächliche Funkfeldparameter im Funkfeldabdeckungsbereich (1) gemessen werden und die Festlegung der funksensiblen Bereiche (4) basierend auf den tatsächlichen Funkfeldparametern erfolgt.

5. Verfahren nach einem der vorhergehenden Ansprüche, wobei die Funkfeldplanung über eine graphische Benutzeroberfläche erfolgt und die funksensiblen Bereiche (4) über diese graphische Benutzeroberfläche in die Funkfeldplanung eingebracht werden.

6. Verfahren nach einem der vorhergehenden Ansprüche, wobei die funksensiblen Bereiche (4) sichtbar **gekennzeichnet** werden.

7. Verfahren nach einem der vorhergehenden Ansprüche, wobei die Funkfeldplanung für eine bestimmte Funktechnologie erfolgt und die funksensiblen Bereiche (4) für andere Funktechnologien gelten.

8. Verfahren nach einem der vorhergehenden Ansprüche, wobei potentielle Funkstörer in Klassen unterteilt werden und das Festlegen der funksensiblen Bereiche unter Berücksichtigung dieser Klassen erfolgt.

9. Computersystem zur Funkfeldplanung, umfassend:
- eine erste Steuereinheit (11) zum Festlegen eines Funkfeldabdeckungsbereichs (1), und
- eine Anzeigeeinheit (12) zum Darstellen von Funkfeldparametern im Funkfeldabdeckungsbereich (1),
**gekennzeichnet durch**
- eine zweite Steuereinheit (13) zum Festlegen eines oder mehrerer funksensibler Bereiche (4) des Funkfeldabdeckungsbereichs (1), welche vor mobilen Funkstörern (5) zu schützen sind, wozu ermittelt wird, in welchen Bereichen des Funkfeldabdeckungsbereichs Funkübertragungen vorgesehen sind, die nicht unterbrochen oder anderweitig negativ beeinflusst werden dürfen.

10. Computersystem nach Anspruch 9, umfassend eine Messvorrichtung zum permanenten Messen einer Funkfeldverteilung.

11. Computersystem nach Anspruch 10, umfassend eine Alarmvorrichtung zum Auslösen eines Alarms, wenn ein Funkstörer (5) in die Nähe eines der funksensiblen Bereiche kommt.

12. Computersystem nach einem der Ansprüche 9 bis 11, umfassend eine Messvorrichtung zum Messen tatsächlicher Funkfeldparameter im Funkfeldabdeckungsbereich (1), wobei die Festlegung der funksensiblen Bereiche (4) basierend auf den tatsächlichen Funkfeldparametern erfolgt.

13. Computersystem nach einem der Ansprüche 9 bis 12, umfassend Kennzeichnungsmittel zum sichtbaren Kennzeichnen der funksensiblen Bereiche (4).

14. Computersystem nach einem der Ansprüche 9 bis 13, umfassend eine Klassifizierungsvorrichtung zum Klassifizieren von Funkstörern (5), wobei das Festlegen der funksensiblen Bereiche (4) unter Berücksichtigung der Klassifizierung erfolgt.

## Claims

1. Method for radio field planning, comprising the following steps:
- specifying (S101) a radio field coverage area (1) and
- representing (S102) radio field parameters in the radio field coverage area (1),
**characterized by**
- specifying (S103) one or more radio-sensitive areas (4) of the radio field coverage area (1) which are to be protected against mobile radio interferers (5), for which purpose areas of the radio field coverage area are determined in which radio transmissions are intended which must not be interrupted or negatively influenced in other ways.

2. Method according to Claim 1, wherein a radio field distribution is permanently measured.

3. Method according to Claim 2, wherein an alarm is triggered when a radio interferer (5) comes into the vicinity of one of the radio-sensitive areas (4).

4. Method according to one of the preceding claims, wherein actual radio field parameters are measured in the radio field coverage area (1) and the radio-sensitive areas (4) are specified on the basis of the actual field parameters.

5. Method according to one of the preceding claims, wherein the radio field planning takes place via a graphical user interface and the radio-sensitive areas (4) are entered into the radio field planning via this graphical user interface.

6. Method according to one of the preceding claims, wherein the radio-sensitive areas (4) are visibly identified.

7. Method according to one of the preceding claims, wherein the radio field planning takes place for a particular radio technology and the radio-sensitive areas (4) apply to other radio technologies.

8. Method according to one of the preceding claims, wherein potential radio interferers are subdivided into classes and the radio-sensitive areas are specified taking into consideration these classes.

9. Computer system for radio field planning, comprising:
- a first control unit (11) for specifying a radio field coverage area (1), and
- a display unit (12) for representing radio field parameters in the radio field coverage area (1),
**characterized by**
- a second control unit (13) for specifying one or more radio-sensitive areas (4) of the radio field coverage area (1), which are to be protected against mobile radio interferers (5), for which purpose the areas of the radio field coverage area are determined in which radio transmissions are intended which must not be interrupted or negatively influenced in other ways.

10. Computer system according to Claim 9, comprising a measuring device for permanently measuring a radio field distribution.

11. Computer system according to Claim 10, comprising an alarm device for triggering an alarm when a radio interferer (5) comes into the vicinity of one of the radio-sensitive areas.

12. Computer system according to one of Claims 9 to 11, comprising a measuring device for measuring actual radio field parameters in the radio field coverage area (1), wherein the radio-sensitive areas (4) are specified on the basis of the actual radio field parameters.

13. Computer system according to one of Claims 9 to 12, comprising identifying means for visibly identifying the radio-sensitive areas (4).

14. Computer system according to one of Claims 9 to 13, comprising a classification device for classifying radio interferers (5), wherein the radio-sensitive areas (4) are specified taking into consideration the classification.

## Revendications

1. Procédé de planification de bonds hertziens comprenant les stades dans lesquels :
- on fixe ( S101) une zone ( 1 ) de couverture de bonds hertziens et
- on représente ( S102 ) des paramètres de bonds hertziens dans la zone ( 1) de couverture de bonds hertziens,
**caractérisé en ce que**
- on fixe ( S103) une ou plusieurs zones ( 4 ) radio sensibles de la zone ( 1 ) de couverture de bonds hertziens qui doivent être protégées de parasites ( 5 ) radio-électriques mobiles, en déterminant à cet effet dans quelle zone de la zone de couverture de bonds hertziens, il est prévu des transmissions radio, qui ne doivent pas être interrompues ou influencées négativement d'une autre façon.

2. Procédé suivant la revendication 1, dans lequel on mesure en permanence une répartition de bonds hertziens.

3. Procédé suivant la revendication 2, dans lequel on déclenche une alerte lorsqu'un parasite ( 5 ) radio-électrique vient à proximité de l'une des zones ( 4 ) radiosensibles.

4. Procédé suivant l'une des revendications précédentes, dans lequel on mesure des paramètres de bonds hertziens réels dans la zone ( 1 ) de recouvrement de bonds hertziens et on effectue la fixation des zones ( 4 ) radiosensisbles sur la base des paramètres de bonds hertziens réels.

5. Procédé suivant l'une des revendications précédentes, dans lequel on effectue la planification de bonds hertziens par une surface graphique d'utilisateur et l'on introduit les zones ( 4 ) radiosensibles dans la planification de bonds hertziens par cette surface graphique d'utilisateur.

6. Procédé suivant l'une des revendications précédentes, dans lequel on caractérise d'une manière visible les zones ( 4) radiosensibles.

7. Procédé suivant l'une des revendications précédentes, dans lequel on effectue la planification de bonds hertziens pour une certaine technologie radio et les zones ( 4 ) radiosensibles valent pour d'autres technologies radio.

8. Procédé suivant l'une des revendications précédentes, dans lequel on subdivise les parasites radio électriques potentiels en classes et on effectue la fixation des zones radiosensibles en tenant compte de ces classes.

9. Système informatique pour la planification de bonds hertziens comprenant :
- une première unité ( 11 ) de commande pour la fixation d'une zone ( 1 ) de couverture de bonds hertziens, et
- une unité ( 12 ) d'affichage pour la représentation de paramètres de bonds hertziens de la zone ( 1 ) de couverture de bonds hertziens,
**caractérisé par**
- une deuxième unité (13) de commande pour la fixation d'une ou plusieurs zones (4) de la zone (1) de couverture de bonds hertziens, qui doivent être protégées de parasites (5) radio-électriques mobiles, en déterminant à cet effet dans quelles zones de la zone de couverture de bonds hertziens il est prévu des transmissions radio qui ne doivent pas être interrompues ou influencées négativement d'une autre façon.

10. Système informatique suivant la revendication 9, comprenant un dispositif de mesure en permanence d'une répartion de bonds hertziens.

11. Système informatique suivant la revendication 10, comprenant un dispositif d'alerte pour déclencher une alerte lorsqu'un parasite ( 5 ) radio-électrique vient à proximité de l'une des zones ( 4) radio-sensibles.

12. Système informatique suivant l'une des revendications 9 à 11, comprenant un dispositif de mesure de paramètres de bonds hertziens réels dans la zone ( 1 ) de couverture de bonds hertziens, la fixation des zones ( 4 ) radio-sensibles s'effectuant sur la base des paramètres de bonds hertziens réels.

13. Système informatique suivant l'une des revendications 9 à 12, comprenant des moyens de caractérisation pour caractériser de manière visible les zones ( 4 ) radiosensibles.

14. Système informatique suivant l'une des revendications 9 à 13, comprenant un dispositif de classification pour classer des parasites ( 5 ) radio-électriques, la fixation des zones ( 4 ) radiosensibles s'effectuant en tenant compte de la classification.
